(19) Europäisches Patentamt
European Patent Office
Office européen des brevets

(11) Veröffentlichungsnummer: **0 144 503**
**B1**

(12) # EUROPÄISCHE PATENTSCHRIFT

(45) Veröffentlichungstag der Patentschrift: **26.11.86**

(51) Int. Cl.⁴: **F 16 B 31/00**

(21) Anmeldenummer: **84107594.8**

(22) Anmeldetag: **29.06.84**

(54) **Verbindungselement für zwei Maschinen- oder Bauteile, wie Pass-Dehn-Schraube.**

(30) Priorität: **02.09.83 DE 8325206 U**

(43) Veröffentlichungstag der Anmeldung:
**19.06.85 Patentblatt 85/25**

(45) Bekanntmachung des Hinweises auf die Patenterteilung:
**26.11.86 Patentblatt 86/48**

(84) Benannte Vertragsstaaten:
**AT BE CH DE FR GB IT LI LU NL SE**

(56) Entgegenhaltungen:
**DE-A-2 233 560**
**DE-B-2 102 910**
**DE-B-2 804 181**
**FR-A-2 151 543**

(73) Patentinhaber: **Friedr. Boesner GmbH, Augustenthaler Strasse, D-5450 Neuwied 13 (DE)**

(72) Erfinder: **Taubert, Hubert, Dipl.- Ing., Klosterstrasse 12, D-5450 Neuwied 21 (DE)**

(74) Vertreter: **Patentanwälte Dipl.- Ing. J. Richter Dipl.- Ing. F. Werdermann, Neuer Wall 10, D-2000 Hamburg 36 (DE)**

**EP 0 144 503 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die Erfindung betrifft ein Verbindungselement für zwei Maschinen- oder Bauteile, wie Paß-Dehnschraube, mit einem Befestigungsgewinde und mit einem einen Schraubenkopf aufweisenden Schraubenschaft, der zwischen dem Schraubenkopf und dem Befestigungsgewinde einen Dehnschaft mit einer Anzahl von Ringen aufweist, wobei zwischen je zwei Ringen eine Nut ausgebildet ist, und bei dem im übergangsbereich von dem Schraubenkopf zu dem Abschnitt mit den Ringen eine Hohlkehle mit einer Ausrundung vorgesehen ist, deren Durchmesser etwa dem Durchmesser des Flankenmaßes der Ringe entspricht und deren Krümmungsradius etwa das 0,1-bis 0,15-fache des Außendurchmessers beträgt, wobei die Kammbreite der Ringe annähernd der Flankenbreite der Vorform der Ringe zur Erzielung einer angemessenen Größe der spielfreien Anlagenfläche zwischen der Paß-Dehnschraube und der Paß-Bohrung in den Maschinenoder Bauteilen entspricht, und der Kerbgrund durch einen Radius bestimmt, der das Zwei- bis Dreifache des Kernradius des Befestigungsgewindes beträgt.

Schrauben brechen bei dynamischer Beanspruchung überwiegend im ersten tragenden Gang des Gewindes oder unter dem Kopf. Die größte dynamische Beanspruchung, die ein Werkstoff ohne zu brechen noch eben dauernd erträgt, wird mit Dauerfestigkeit wie folgt bezeichnet.

$$\sigma_D = \sigma_M \pm \sigma_A ,$$

wobei

$\sigma_D$

= Dauerfestigkeit, $\delta_M$ = mittlere statische Belastung bzw. Vorspannung,
$\delta_A$ = Spannungsausschlag der Wechselbeanspruchung
ist.

Dieser gerade noch dauernd ertragbare Spannungsausschlag ist für Stahlschrauben mit einer Festigkeit 800 bis 1200 N/mm$^2$ $\delta_A$ = 60 N/mm$^2$ und für sehr hochfeste Schrauben 1300 bis 7400 N/mm $\delta_A$ = 100 N/mm . Dieser Spannungsausschlag ist praktisch unabhängig von der Vorspannung und der Stahlqualität.

Die Erkenntnisse über den Einfluß der Elastizitätsverhältnisse zwischen der Schraube und den von ihr verspannten Teilen ermöglicht es, den von der Schraube spürbaren Spannungsausschlag zu senken. Bei gegebener dynamischer Beanspruchung einer Schraubenverbindung wird der vom Gewinde spürbare Anteil der dynamischen Last (Spannungsausschlag $\delta_A$) umso kleiner, je weicher die Federung der Schraube und je härter und steifer die verspannten Teile der Verbindung sind.

Aufgrund der höheren Anforderungen, z.B. an Verbrennungsmotoren von Kraftfahrzeugen, werden die Drehzahlen und Kolbengeschwindigkeiten erhöht. Hierdurch steigen auch die Belastungen an den Schraubenbolzen, die die Verbindung zwischen dem Pleuelfuß und dem Pleueldeckel einer Pleuelstange herstellen. Neuere Vorschriften sehen, z.B. für Pleuelschrauben, höhere und eingeengte Zugfestigkeiten, z.B. von $\delta_b$ = 1100 bis 1200 N/mm$^2$; 7200 bis 1300 N/mm$^2$ und 1300 bis 1400 N/mm$^2$ mit einer Vorspannung von etwa 90% und größer der Streckgrenze $\delta_S$ vor.

Hiermit ist ein Produkt entwickelt worden, das die beiden zu verbindenden Teile wie Pleuelfuß des Pleuelschaftes und Pleueldeckel mit sehr hoher Vorspannung im Streckgrenzenbereich des Bolzens zusammenfügt.

Diese Anforderungen werden erreicht durch die Auswahl geeigneter Werkstoffqualitäten und Wärmebehandlungsverfahren, um hierdurch höhere Qualitätsgüten mit größerer Elastizitätseigenschaft bei hoher Festigkeit zu erzielen.

Darüber hinaus ist es erforderlich, durch geometrische Änderungen des Bolzens die elastische Dehnung zu erhohen.

Hiervon ausgehend ist die Dehnschraube entwickelt worden, die bei Verschraubungen verwendet wird, die dauernden Wechselbelastungen ausgesetzt sind, und bei der es sich um eine Schraube mit einem dunnen Schaft handelt, die sehr elastisch federnd ist, wodurch die Dauerbruchgefahr der Schraubenverbindung vermindert wird. Diese Dehnschraube besitzt einen Schaftteil mit einem verjüngten Durchmesser, der etwa 90% des Gewindekerndurchmessers entspricht. Die Paßschraube ist zusätzlich mit einer Passung oder mit zwei Passungen versehen, deren Durchmesser größer sind als der Gewindeaußendurchmesser der Schraube, die mit zugeordneten Passungen der Bohrung zusammenarbeiten und im Bereich der Schraubenmitte und evtl. im Bereich des Kopfendes liegen. An dem dem Kopfende gegenüberliegenden Ende ist das Schraubengewinde vorgesehen.

Eine Paß-Dehnschraube der eingangs genannten Art ist durch die FR-A-21 51 543 bekannt. Bei dieser Paß-Dehnschraube ist der Spannungsquerschnitt im Kerbgrund des Paß-Dehngewindes gegenüber dem Spannungsquerschnitt des Befestigungsgewindes 7% bis 8% kleiner, was zur Folge hat, daß auch die Streckgrenzenkraft um 7% bis 8% und somit auch die Vorspannung der Bauteile um den gleichen Prozentsatz

kleiner ist. Es wird dadurch keine hohe Gleichmaßdehnung erreicht; der Streckgrenzenpunkt im Spannungs/Dehnungs-Diagramm wird herabgesetzt, so daß keine hohe Biegeelastizität gegeben ist. Außerdem führen die unterschiedlichen Spannungsquerschnitte auf dem Schaftkörper zu Dehnungssprüngen, die eine gleichmäßige, elastische Dehnung über die gesamte Schraubenlänge verhindern.

Durch die DE-A-22 33 560 ist ein Verfahren zur Herstellung von Dehnschäften an Werkstücken für Verbindungselemente, wie Schrauben, Stifte, Bolzen od.dgl. bekannt, nach dem mindestens über einen Teil der Länge des Werkstückes Umfangsrillen eingewalzt oder eingerollt werden, wobei der Roll- oder Walzvorgang ausgehend vom Rohlingsdurchmesser (Walzdurchmesser) bis zu einer Tiefe durchgeführt wird, bei welcher der entsprechende Kerndurchmesser ($d_4$) dem Maß

$$d_4 = \sqrt{\frac{C \cdot L}{E} \quad \frac{4}{\pi}} = 2 \sqrt{\frac{1}{} \cdot \frac{F \cdot L}{E \cdot \lambda}}$$

entspricht, wobei E das Elastizitätsmodul des Materials, C die gewünschte Federkonstante, L die Länge des Dehnteils und $\lambda$ die gewünschte elastische Längung des Dehnteils unter Einwirkung der Axialkraft F ist. Die nach diesem Verfahren hergestellte Paß-Dehnschraube weist auf ihrem Umfang über einen Teil ihrer Schraubenschaftlänge Umfangsrillen mit dazwischenliegenden Wulsten auf, wobei die Umfangsrillen als geschlossene parallele Ringnuten ausgebildet sind und sowohl die Ringnuten als auch die Wulste etwa kreisbogenförmig begrenzt sind. An den Schraubenschaftabschnitt mit den Wulsten und Ringnuten schließt sich ein Befestigungsgewinde an. Auch bei dieser Dehnschraube ist der Spannungsquerschnitt im Kerbgrund der Peß-Dehnringe kleiner als der Spannungsquerschnitt des Befestigungsgewindes.

Die statische Belastbarkeit der bekannten Paß-Dehnschrauben ist aufgrund des verjüngten Dehnungsschaftes über die gesamte Schraubenlänge nicht gleich. Ferner haben die Paß-Dehnschrauben aufgrund der Durchmesserunterschiede auf dem Schaftkörper zum Gewindekern Dehnungssprünge, die eine gleichmäßige elastische Dehnung über die gesamte Schraubenlänge verhindern. Des weiteren tritt bei dynamischer Belastung aufgrund der auftretenden Querkräfte und der Vibration in den Dehnschrauben am zylindrischen Paßsitz in Verbindung mit dem Sitz der Bohrung eine Paßflächenkorrosion auf, die eine molekulare Oberflächenzerstörung bewirkt. Diese Paßflächenkorrosion führt zu Oberflächenrissen (Fig. 5) und zu Brücken, die schwere Beschädigungen des Motors zur Folge haben. Durch kleine Amplituden aufweisende Relativbewegungen der Kontakt-Oberflächen der Paßteile entstehen Wellen mit kleiner Amplitude, aber hoher Frequenz, d.h. Mikrowellen, die eine hohe lokale überhitzung fördern und eine Oxidation in den Oberflächenkristallen hervorrufen. Diese heißen Oxid-Teilchen haben die Wirkung eines Schleifmittels und bewirken Risse und Zerstörungen der Paßoberfläche mit Bruchfolge.

Die Erfindung löst die Aufgabe, ein verbessertes Verbindungselement, wie Paß-Dehnschraube mit hoher Festigkeit zu schaffen, bei dem der zwischen je zwei konzentrischen Paß-Dehnringen liegende Kerbgrund und der Kern des Befestigungsgewindes derart zusammenwirken, daß bei dem Schrauben- oder Gewindebolzenkorper während der durch die Zugbeanspruchtung der Paß-Dehnschraube verursachten elastischen Dehnung keine Dehnungssprunge oder -risse auftreten und eine Erweiterung der Gleichmaßdehnung erzielt wird und das so ausgebildet ist, daß eine spielfreie Anlage der Paß-Dehnringe mit der Paßbohrung im Werkstück, Maschinen- oder Bauteil stabilisiert ist, und daß darüber hinaus sowohl eine genaue Passung in bezug auf die Paßbohrung in einem Werkstuck, Maschinenoder Bauteil, wie Pleuelstange od.dgl., als auch eine enge Koaxialitatstoleranz zwischen dem Befestigungsgewinde und dem Paßdurchmesser am Kamm der Paß-Dehnringe gewährleistet ist.

Zur Lösung dieser Aufgabe wird bei einem Verbindungselement der eingangs genannten Art beträgt, vorgeschlagen, das erfindungsgemäß in der Weise ausgebildet ist, daß die Ringe als parallel zueinander verlaufende konzentrische Paß-Dehnringe ausgebildet sind, deren Außendurchmesser um 0,1 bis 0,5 mm nach der Formel

$d_{Ringe} > d_1$

größer als der Außendurchmesser des Befestigungsgewindes ist und die einen Spannungsquerschnitt in dem Kerbgrund der Paßnuten zwischen je zwei konzentrischen Paß-Dehnringen (A konz. Ringe) aufweisen, der dem Spannungsquerschnitt ($A_S$) des Befestigungsgewindes nach der Formel

$A_S = A_{konz.Ringe}$

entspricht, wobei der Kerbgrund zwei Radien aufweisen kann, die jeweils dem Zwei- bis Dreifachen des Kernradius des Befestigungsgewindes entsprechen.

Hiernach ist ein Verbindungselement, wie Paß-Dehnschraube, geschaffen, das aufgrund der gleichen Spannungsquerschnitte des Befestigungsgewindes und der konzentrischen Paß-Dehnringe nach der Formel

$A_S = A_{konz.Ringe}$

gegenüber der herkömmlichen Dehnschraube

$A_{SDehnschaft} = 90\% \, A_S$

eine sehr hohe Zugfestigkeit bei großer Gleichmaßdehnung aufweist, wie dies aus dem δ -ε -Diagramm von Pleuelschrauben entsprechend Fig. 8 hervorgeht, in der mit 1 die Kurve für Dünnschaftschrauben

$A_S < A_{Schaftdurchmesser}$

mit 2 die Kurve für Paß-Dehnschrauben mit konzentrischen Ringen

$A_S = A_{konz.Ringe}$

mit 3 die Kurve für Dehnschrauben

$A_S < A_{Dehnschaft}$ (Taillendurchmesser)

angegeben ist.

Außerdem sind parallel verlaufende konzentrische Paß-Dehnringe, die ebenfalls durch Gewinderollen oder -walzen hergestellt werden, im mittleren Bereich des Schraubenschaftes im Anschluß an das Befestigungsgewinde bis zur Hohlkehle unter dem Kopf angeordnet.

Der Außendurchmesser der konzentrischen Paß-Dehnringe, gemessen über dem Kamm, ist um 0,1 bis 0,5 mm größer als der Außendurchmesser des Gewindes nach der Formel

$d_{konz.Ringe} < d_1$

d.h., daß das Paßmaß der konzentrischen Paß-Dehnringe um 0,1 bis 0,5 mm größer als der Nenndurchmesser des Befestigungsgewindes ist.

Der Spannungsquerschnitt im Kerbgrund der konzentrischen Paßringe ($A_{konz.Ringe}$) ist gleich dem Spannungsquerschnitt des Befestigungsgewindes ($A_S$) nach der Formel

$A_S$ $A_{konz.Ringe}$ ·

Hierdurch wirken die konzentrischen Nuten der Paß-Dehnringe und der Kern des Befestigungsgewindes dahingehend zusammen, daß bei dem Schaft während der durch die Zugbeanspruchung verursachten elastischen Dehnung der Paß-Dehnschraube kein Dehnungssprung auftritt und hierdurch eine erhöhte Vibrationssicherheit und somit eine verbesserte Dauerhaltbarkeit gegeben ist (Fig. 9). Ferner wird eine Erweiterung der Gleichmaßdehnung erzielt. Der Radius im Kerbgrund der konzentrischen Paß-Dehnringe beträgt das Zwei- bis Dreifache des Kernradius des Befestigungsgewindes, wobei der Kerbgrund auch zwei Radien aufweisen kann, die jeweils dem Zwei- bis Dreifachen des Kernradius des Befestigungsgewindes entsprechen.

Die Kammbreite der konzentrischen Paß-Dehnringe ist dabei ungefähr gleich dem Flankenbereich der Vorform der Paß-Dehnringe. Hierdurch wird die spielfreie Anlage mit der Paßbohrung stabilisiert, wodurch eine Erhöhung der Verschleißfestigkeit erreicht wird.

Der letzte Arbeitsgang bei der Herstellung der konzentrischen Paß-Dehnringe ist ein Egalisier-Roll- bzw. Glatt-Walzvorgang (Fig.7) in Kombination mit dem Walzen des Befestigungsgewindes, um die Koaxialität zu gewährleisten. Hierdurch wird sowohl die genaue Passung in bezug auf die Paßbohrung, z.B. bei einer Pleuelstange, als auch die geforderte enge Koaxialitätstoleranz zwischen dem Befestigungsgewinde und dem Paßdurchmesser am Kamm der konzentrischen Paß-Dehnringe gewährleistet.

Der kombinierte Gewinde-, Roll-, Egalisier-Walzvorgang zur Herstellung des Befestigungsgewindes und des Außendurchmessers der konzentrischen Paß-Dehnringe wird in vergütetem Zustand durchgeführt. Hierdurch wird aufgrund der initierten Oberflächenverfestigung des Gewindes eine Erhöhung der Dauerhaltbarkeit erzielt.

Aufgrund der vorgesehenen parallelen konzentrischen Paß-Dehnringe wird die elastische Dehnung ohne Sprünge gleichmäßig über die gesamte Schraube (Gleichmaßdehnung) und die Vibrationssicherheit der Schraubenverbindung sowie die Dauerfestigkeit erheblich gesteigert, so daß Motorbeschädigungen aufgrund von Brüchen oder Rissen der Pleuelschrauben vermieden werden, wie dies aus Fig. 9 ersichtlich ist, in der die Versuchsergebnisse der Untersuchungen von Verschraubungen gegen Lösen durch Vibration anhand der abgebildeten Kurven wiedergegeben sind. Ferner werden Schwierigkeiten verhindert, die auf eine Paßflächenkorrosion zurückzuführen sind, die sonst aufgrund der leichten Relativbewegung zwischen der Paßbohrung und dem zylindrischen Paßsitz durch molekulare Grenzflächenzerstörung auftritt (Fig. 6).

Es wird eine Paß-Dehnschraube mit folgenden Eigenschaften erhalten:

- kein Dehnungsprung über die Klemmlänge,
- Erweiterung der Gleichmaßdehnung bei hoher Festigkeit im δ -ε-Diagramm,
- durch Erweiterung der Gleichmaßdehnung bei hoher Festigkeit ist eine sichere Verschraubung im Streckgrenzenbereich gewährleistet,
- durch gleiche Spannungsguerschnitte $A_S = A_{konz.Ringe}$ ist höhere Zugfestigkeit gegenüber der herkömmlichen Dehnschraube gegeben.

$A_{Dehnschaft} = 90\% A_S$

- höhere Zugfestigkeit durch die Geometrie der konzentrischen Paß-Dehnringe. Hierdurch unter Vorspannung einer Oberflächenverformung und somit Oberflächenverfestigung im Kerbgrund der konzentrischen Paß-Dehnringe,
- biegeweich , hierdurch größere Vibrationssicherheit und somit verbesserte Dauerhaltbarkeit.

Im folgenden wird der Gegenstand der Erfindung in den Zeichnungen erläutert. Es zeigt

Fig. 1 in einer vergrößerten Seitenansicht eine in einem Werkstück angeordnete Paß-Dehnschraube,

Fig. 2 in einer Seitenansicht die Paß-Dehnschraube,

Fig. 3 teils in einer Seitenansicht, teils in einem senkrechten Schnitt die in einer Paßbohrung eines Werkstückes angeordnete Paß-Dehnschraube,

Fig. 4 teils in Ansicht, teils in einem Schnitt eine Pleuelstange mit den Pleuelfuß mit dem Pleueldeckel

miteinander verbindenden Paß-Dehnschraube,

Fig. 5 den Kraftlinienverlauf bei zylindrischem Paßsitz,

Fig. 6 den Kraftlinienverlauf bei konzentrischen Paß-Dehnringen,

Fig. 7 in einem senkrechten Schnitt einen Abschnitt der Paß-Dehschraube zur Veranschaulichung, daß die Kammbreite der konzentrischen Paß-Dehnringe annähernd der Flankenbreite der Vorform der Paß-Dehnringe entspricht,

Fig. 8 das δ -ε-Diagramm von Pleuelschrauben mit den Kurven für Dünnschaftschrauben, Paß-Dehnschrauben mit konzentrischen Paß-Dehnringen und Dehnschrauben, und

Fig. 9 den Kurvenverlauf einer Pleuelschraube und einer Pleuelschraube mit konzentrischen Paß-Dehnringen als Ergebnis der Untersuchungen von Verschraubungen gegen Lösen durch Vibration.

Die in den Fig. 1 bis 3 dargestellte Paß-Dehnschraube 100 besteht aus einem Schraubenschaft 10 mit einendig an diesem angeformten Kopf 11. Der Schraubenschaft 10 ist benachbart zu seinem Kopf mit einem Abschnitt 12 versehen, der eine Anzahl von parallel zueinander verlaufenden konzentrischen Paß-Dehnringen 120 aufweist. Die zwischen je zwei Paß-Dehnringen 120 ausgebildete konzentrische Paßnut ist mit 12i bezeichnet, ihr Kerbgrund mit 120a (Fig. 1, 2 und 3).

An den Abschnitt 12 mit den konzentrischen Paß-Dehnringen 120 schließt sich das in bekannter Weise ausgebildete Schraubenbefestigungsgewinde 13 an, welches bis zum Ende 10a des Schraubenschafts 10 der Paß-Dehnschraube 100 geführt ist.

Im Übergangsbereich vom Schraubenkopf 11 zum Abschnitt 12 mit den konzentrischen Paß-Dehnringen 120 ist eine Hohlkehle 14 mit einer bei 15 angedeutete Ausrundung vorgesehen (Fig. 1). Der Durchmesser der Ausrundung 15 und der Hohlkehle 14 ist etwa gleich dem Durchmesser des Flankenmaßes der konzentrischen Paß-Dehnringe 120. Der Krümmungsradius der Hohlkehle 14 betragt das 0,1-bis 0,15-fache des Außendurchmessers des Befestigungsgewindes 13.

Die konzentrischen Paß-Dehnringe 120 weisen einen Spannungsquerschnitt im Kerbgrund der Paßnuten 121 auf, der in Fig. bei 120a ($A_{konz.Ringe}$) angedeutet ist und der dem Gewindespannungsquerschnitt ($A_S$), der in Fig. 1 mit 13a bezeichnet ist, des Befestigungsgewindes 13 entspricht, wobei der Radius im Kerbgrund 120a das Zwei- bis Dreifache des Kernradius des Befestigungsgewindes beträgt oder ein Doppelradius aufweist, der jeweils im Zwei- bis Dreifachen des Kernradius des Befestigungsgewindes liegt. Die Kammbreite, in Fig. 1 bei 120b angedeutet, der konzentrischen Paß-Dehnringe 120 entspricht annähernd der Flankenbreite der Vorform der Paß-Dehnringe (Fig. 1 und 7).

Der Außendurchmesser der konzentrischen Paß-Dehnringe ist um 0,1 bis 0,5 mm größer als der Außendurchmesser des Befestigungsgewindes.

In Fig. 9 ist das Ergebnis der Untersuchung von Verschraubungen gegen Lösen durch Vibration am Beispiel einer Pleuelschraube M 8 x 1 x 40,5 (Kurve 1) und einer Pleuelschraube mit konzentrischen Paß-Dehnringen M 8 x 1 x 42 (Kurve 2) dargestellt.

## Patentanspruch

Verbindungselement für zwei Maschinen- oder Bauteile, wie Paß-Dehnschraube, mit einem Befestigungsgewinde (13) und mit einem einen Schraubenkopf (11) aufweisenden Schraubenschaft (10), der zwischen dem Schraubenkopf (11) und dem Befestigungsgewinde (13) einen Dehnschaft mit einer Anzahl von Ringen (120) aufweist, wobei zwischen je zwei Ringen eine Nut (121) ausgebildet ist, und bei dem im übergangsbereich von dem Schraubenkopf (11) zu dem Abschnitt mit den Ringen (120) eine Hohlkehle (14) mit einer Ausrundung (15) vorgesehen ist, deren Durchmesser etwa dem Durchmesser des Flankenmaßes der Ringe (120) entspricht und deren Krummungsradius etwa das 0,1-bis 0,15-fache des Außendurchmessers betragt, wwobei die Kammbreite (120b) der Ringe (120) annähernd der Flankenbreite der Vorform der Ringe (120) zur Erzielung einer angemessenen Größe der spielfreien Anlagenfläche zwischen der Paß-Dehnschraube und der Paß-Bohrung in den Maschinen oder Bauteilen entspricht, und der Kerbgrund durch einem Radius bestimmt ist, der (120a) das Zwei- bis Dreifache des Kernradius des Befestigungsgewindes (13) beträgt, dadurch gekennzeichnet, daß die Ringe (120) als parallel zueinander verlaufende konzentrische Paß-Dehnringe ausgebildet sind, deren Außendurchmesser um 0,1 bis 0,5 mm nach der Formel

$d_{Ringe} < d_1$

größer als der Außendurchmesser des Befestigungsgewindes (13) ist und die einen Spannungsquerschnitt in dem Kerbgrund (120a) der Paßnuten (121) zwischen je zwei konzentrischen Paß-Dehnringen (120) ($A_{konz.Ringe}$) aufweisen, der dem Spannungsquerschnitt ($A_S$) (13a) des Befestigungsgewindes (13) nach der Formel

$A_S = A_{konz.Ringe}$ entspricht, wobei der Kerbgrund (120a) zwei Radien aufweisen kann, die jeweils dem Zwei- bis Dreifachen des Kernradius des Befestigungsgewindes (13) entsprechen.

## Claim

Connecting element for two machine parts or structural parts for example extensible-fit screw with a fastening thread (13) and with a barrel (10) having a screw head (11), which has an extension barrel with a number of rings (120) between the screw head (11) and the fastening thread (13), whereby a groove (121) is arranged respectively between two rings and in the transition area of which from the screw head (11) to the ring section (120) a fillet (14) with a curvature (15) is provided, the diameter of which corresponds approximately to the diameter of the pitch dimension of the rings (120) and the bending radius of which is approximately 0.1 to 0.15 as large as the outer diameter, whereby the width of the crest (120b) of the rings (120) approximately corresponds to the width of the pitch of the preform of the rings (120) in order to achieve an appropriate dimension of the contact surface free of play between the extensible-fitscrew and the extensible-fit bore hole in the machine parts or structural parts, and the groove root (120a) is defined by a radius which is two to three times as large as the core radius of the fastening thread (13), characterized in that the rings (120) are arranged as parallel concentric extensible-fit rings, the outer diameter of which is by 0.1 to 0.5 mm larger according to the formula

$d_{rings} < d_1$

than the outer diameter of the fastening thread (13) and which have a stress cross-section in the groove root (120a) of the extensible-fit grooves (121) respectively between two concentric extensible-fit rings (120) ($A_{conc. rings}$) which corresponds to the stress cross-section ($A_S$) (13a) of the fastening thread (13) according to the formula

$A_S = A_{conc.rings}$,

whereby the groove root (120a) can have two radii, which are two to three times as large as the core radius of the fastening thread (13).

## Revendication

Elément d'assemblage pour deux organes de machine ou deux pièces de construction, tels que vis d'ajustage extensibles, avec un filet de fixation (13) et une tige de vis (10) présentant une tête de vis (11), qui présente une tige extensible entre la tête de vis (11) et le filet de fixation (13) avec un certain nombre d'anneaux (120), une rainure (121) étant formée entre chaque groupe de deux anneaux et une gorge creuse (14) avec un arrondi (15) étant prévue dans la zone de tramsition entre la tête de vis (11) et la portion avec les enneaux (120), gorge creuse dont le diamètre correspond approximativement au diamètre de la cote des flancs des anneaux (120) et dont le rayon de courbure correspond approximativement à 0,1 à 0,15 fois le diamètre extérieur, la largeur de le crête (120b) des anneaux correspondant approximativement à la largeur des flancs de l'ébauche des anneaux (120) pour obtenir une grandeur appropriée de la surface d'about sans jeu entre la vis d'ajustage extensible et la forure d'ajustage des organes de machine ou pièces de construction, le fond d'entaille (120a) étant déterminé par un rayon qui est du double au triple du rayon du noyau central du filet de fixation (13), caractérisé en ce que les anneaux (120) sont formés comme des anneaux extensibles concentriques parallèles les uns aux autres dont le diamètre extérieur est de 0,1 à 0,5 mm supérieur au diamètre extérieur du filet de fixation (13) selon la formule

$d_{anneaux} < d_1$

et présentent une section de résistance dans le fond d'entaille (120a) des rainures d'ajustage (121) entre chaque groupe de deux anneaux extensibles concentriques (120) ($A_{anneaux\ conc.}$) qui correspond à la tension de résistance ($A_s$) (13a) du filet de fixation (13) selon la formule

$A_S = A_{anneaux\ conc.}$

le fond d'entaille (120e) pouvant présenter deux rayons qui sont respectivement du double ou triple du rayon du noyau central du filet de fixation (13).

FIG. 1

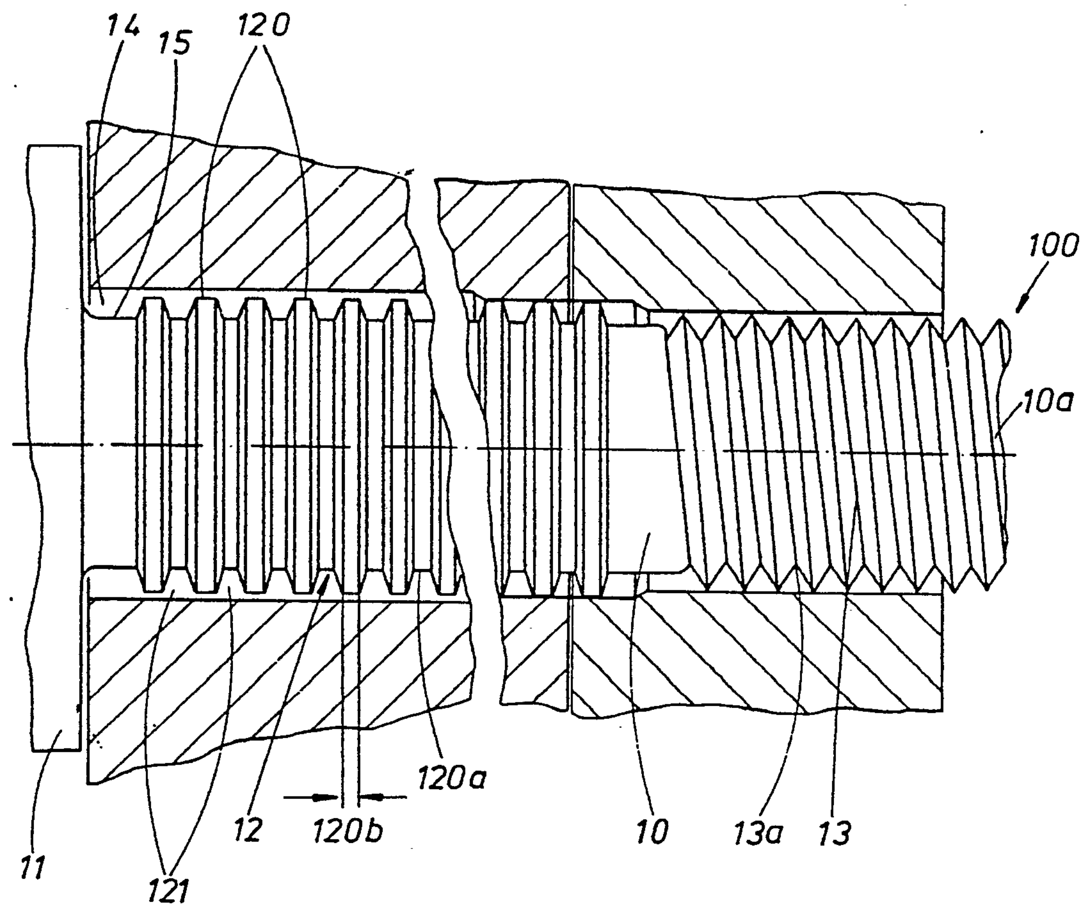

14
15
120
100
10a
120a
11
121
12
120b
10
13a
13


FIG. 2

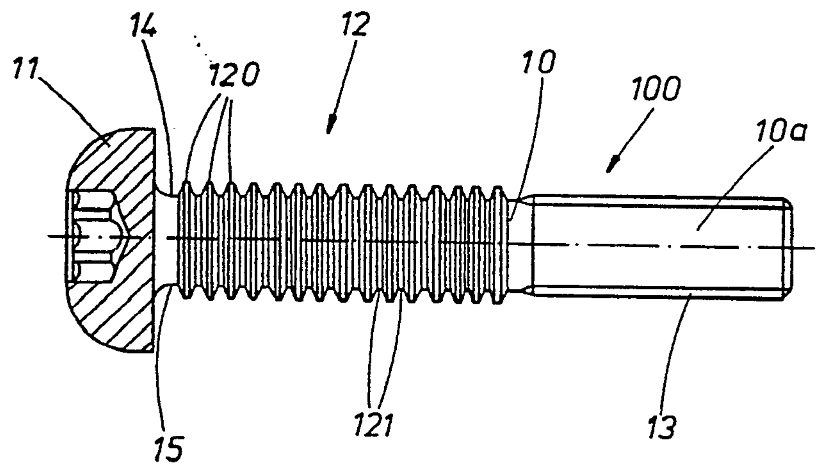

14
12
11
120
10
100
10a
15
121
13

FIG. 3

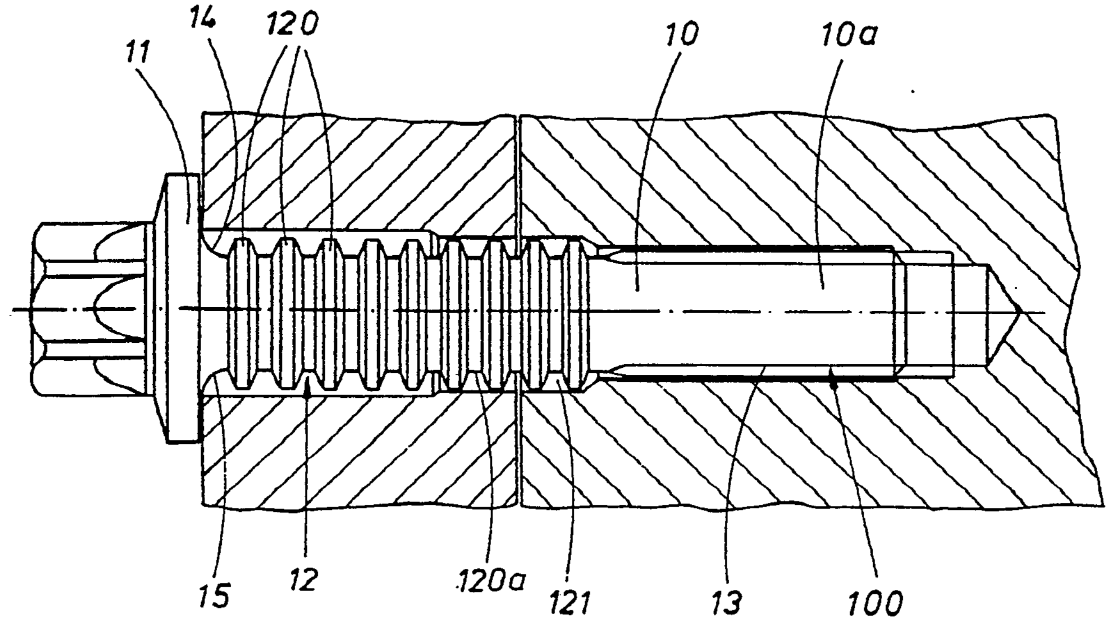


FIG. 4

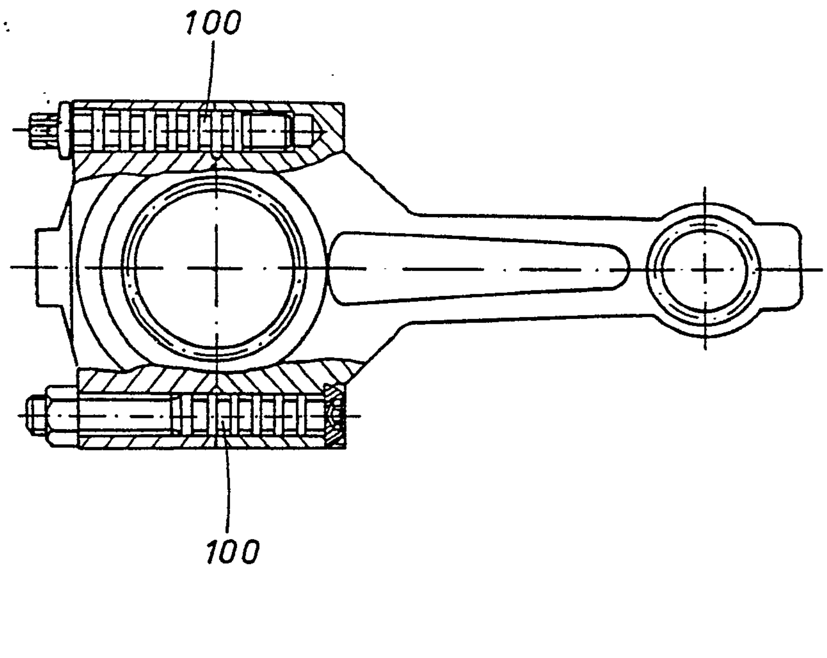

FIG.5

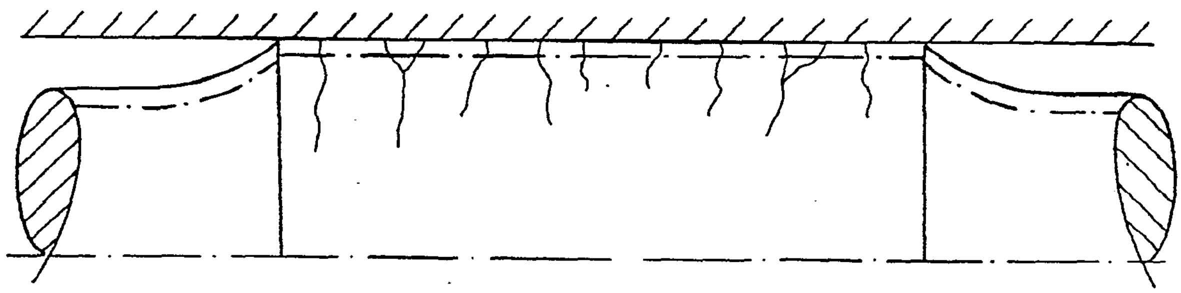

FIG.6

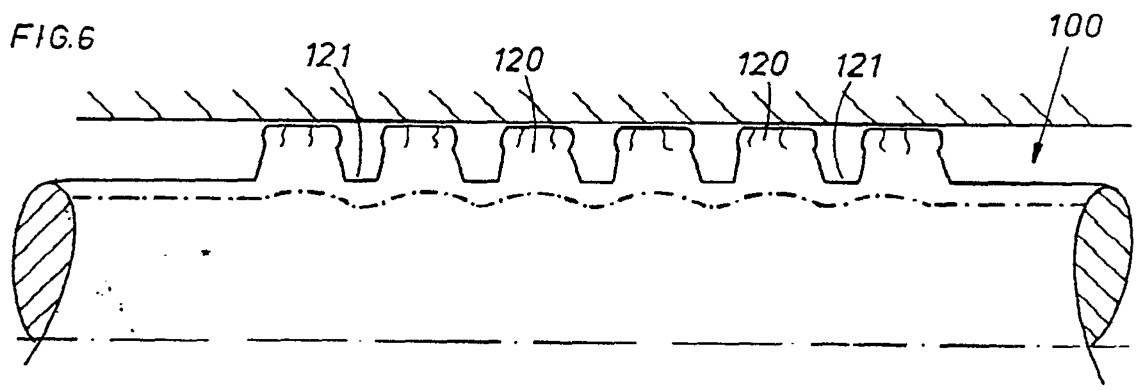

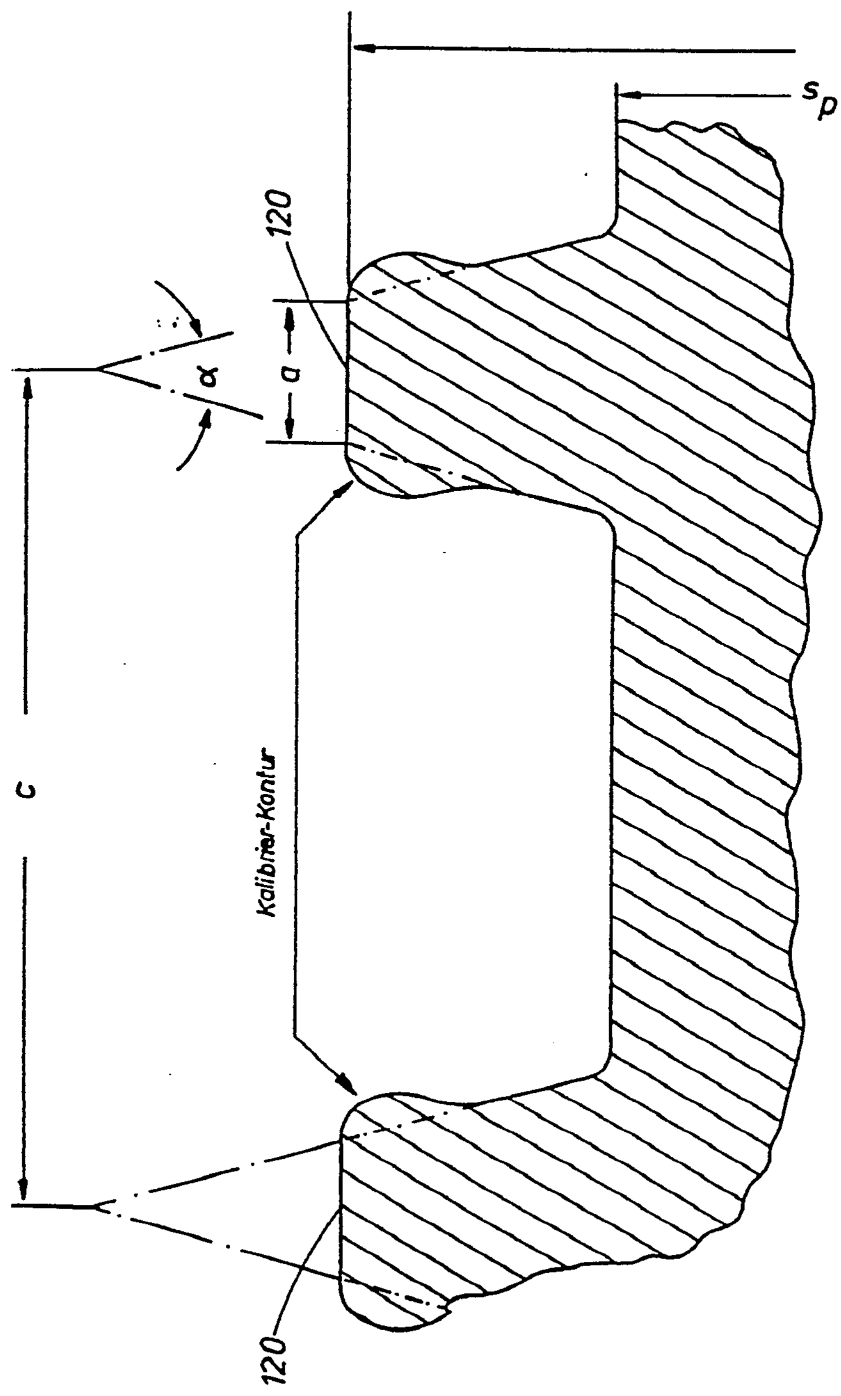


FIG.7

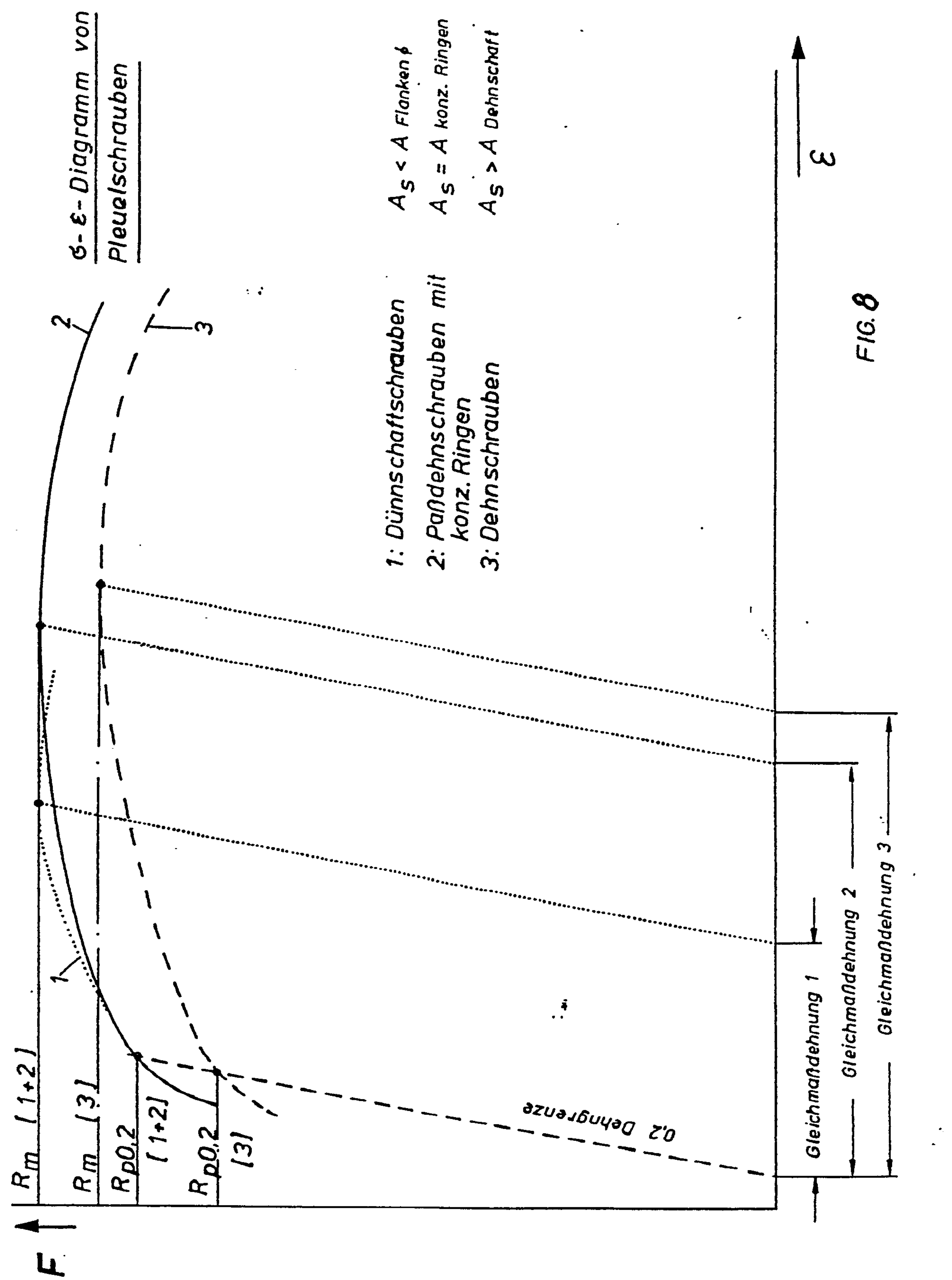
σ- ε- Diagramm von
Pleuelschrauben
1: Dünnschaftschrauben
2: Paßdehnschrauben mit konz. Ringen
3: Dehnschrauben
$A_S$ < A Flanken ∅
$A_S$ = A konz. Ringen
$A_S$ > A Dehnschaft
ε
F
$R_m$ (1+2)
$R_m$ (3)
$R_{p0,2}$ (1+2)
$R_{p0,2}$ (3)
0,2 Dehngrenze
1
2
3
Gleichmaßdehnung 1
Gleichmaßdehnung 2
Gleichmaßdehnung 3

FIG. 8

FIG. 9

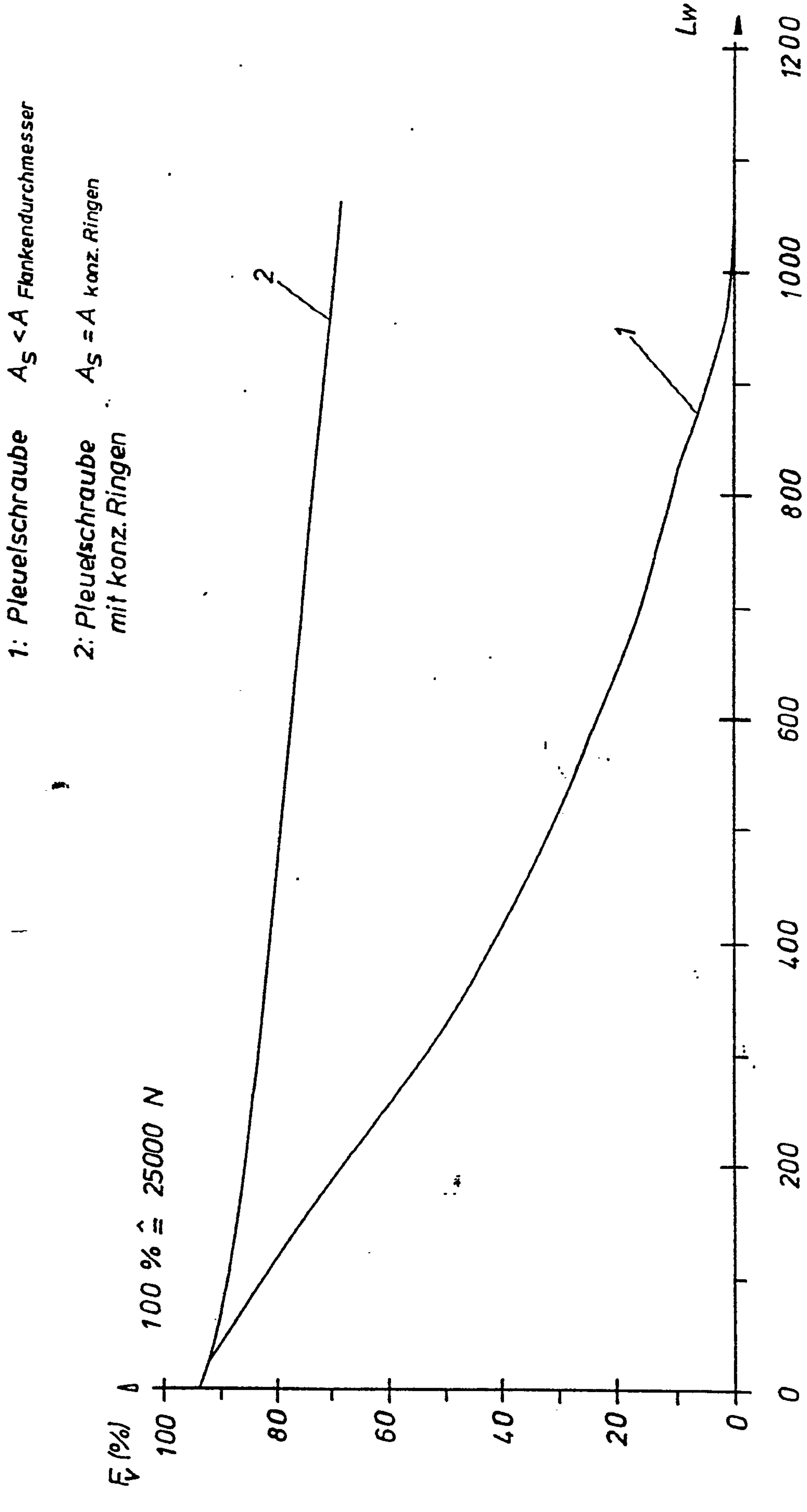
1: Pleuelschraube $A_S < A$ Flankendurchmesser
2: Pleuelschraube mit konz. Ringen $A_S = A$ konz. Ringen
100 % ≙ 25000 N
$F_V$ (%)
100
80
60
40
20
0
Lw
0
200
400
600
800
1000
1200
1
2